# EUROPEAN PATENT APPLICATION

(11) **EP 4 775 288 A1**
(43) Date of publication of application: **15.07.2026**
(21) Application number: 26179812.8
(22) Date of filing: 10.06.2025
(51) Int. Cl.: B01D 27/00, B01D 29/13, B01D 36/00

(54) **FUEL WATER SEPARATOR FILTER WITH WATER COLLECTION FEATURES**

(30) Priority: 27.06.2024 US 202463664855 P
(62) Divisional of application: 25181894.4
(71) Applicant: Baldwin Filters, Inc., Cleveland, OH 44124 (US)
(72) Inventor: ERICKSON, Brian K, Kearney, 68845 (US); SCHWEITZER, Stephen W, Kearney, 68845 (US)
(74) Representative: Murgitroyd & Company

(57) **Abstract**

A fuel filter is provided, comprising a ring of filter media that has an upper end and a lower end, a support assembly comprising an upper end wall portion connected to the upper end, a lower end wall portion connected to the lower end, a first tube portion providing a perforate region, a second tube portion radially spaced from the first tube portion, wherein the second tube portion supports a water stripper media. First and second annular seals are provided in axial spaced relation, the first tube portion carrying the first annular seal below the lower end wall portion, and the second tube portion carrying the second annular seal above the lower end wall portion, wherein a water collection sump is provided in a region above the first annular seal.

## Description

### FIELD OF THE INVENTION

This invention generally relates to filters and more particular to fuel filters with multiple stages of filtration.

### BACKGROUND OF THE INVENTION

Fuel filters with multiple filter stages are known, such as described in U.S. Patents assigned to Parker-Hannifin Corporation, U.S. Patent Nos. 5,458,767 entitled *"Fuel filter assembly with dual filter media and by-pass device";* and 6,174,438 entitled *"Dual pass fuel filter assembly and element therefor*".

U.S. Patent No. 9,333,448 assigned to Mahle Int GMBH and entitled *"Filter Device"* discloses a fuel filter for separation of water and contaminants from fuel and includes ring filter element arranged in a filter housing in an upright manner. The ring filter element has an upper end disc and a lower end disc. A dirt pot has a water separator arranged therein and be provided on the lower end disc. The dirt pot also has a protruding pin. The filter housing has a channel configured to receive the pin. The filter device is operational when the pin engages into the channel.

US 2013/0327699 assigned to Mahle Int GMBH and entitled "Fuel Filter" discloses a fuel filter that includes a housing having a first annular filter element and a second annular filter element. The filter elements may be arranged coaxially and offset to each other in the axial direction and may be connected in series and therefore configured to allow flow to pass through each in succession. The annular filter elements may be selectively replaceable.

However, in both the '448 and '699 patent publications, plumbing complexities and/or additional structures such as a bottom structure on the filter (e.g., referred to as a "dirt pot" in the '448 patent) are required. As will be appreciated by the present disclosure, improvements and/or features over the state of the art are provided.

### BRIEF SUMMARY OF THE INVENTION

Fuel filter embodiments herein may better prevent re-entrainment of water droplets into the fuel stream and/or may reduce the total number of required pieces to create a quiet zone for water stripped from fuel to collect and be transferred and drained as needed by application, and/or that may actuate a drain port within the filter housing in some embodiments.

In accordance with an inventive aspect of the present invention, a fuel filter comprises: a ring of filter media that has an upper end and a lower end; and a support assembly. The support assembly comprises: (a) upper end wall portion connected to the upper end, (b) a lower end wall portion connected to the lower end, (c) a first tube portion, the first tube portion extending between the upper end wall portion and the lower end wall portion and arranged along the ring of filter media, and (d) a second tube portion radially spaced from the first tube portion, in which the second tube portion supports a water stripper media. Furthermore, the first tube portion includes: (i) an annular shroud region extending from the lower end wall portion with (ii) a perforate region arranged above the annular shroud region toward the upper end wall portion. A water collection sump is delimited by the annular shroud region.

One more of the features in any one or more of the of the following paragraphs may be used in alone or combination with this inventive aspect.

It is a feature that the annular shroud region may extend above the lower end wall portion and cover a lower region of the ring of filter media.

It is a feature that the annular shroud may cover at least 15% of an axial span of the ring of filter media, more preferably at least 20 % of the axial span of the ring of filter media, and most preferably between 25% and 35 % of the axial span of the ring of filter media.

It is a feature that the annular shroud region is less perforate than the perforate region for causing in use fuel velocity to be lower proximate the lower end and the annular shroud region as compared to the perforate region. In this manner, the annular shroud region prevents water that gravitationally migrates into the water collection sump from re-emulsifying into fuel flow.

In the above feature and/or inventive aspect that the annular shroud region is preferably provided by an imperforate ring portion.

It is a feature that the water collection sump may comprise an annular cavity extending between the annular shroud region and a lower portion of the second tube portion.

It is a feature that the first tube portion may be an outer tube portion arranged along an inner periphery of the ring of filter media and the second tube portion may be an inner tube portion radially inside of the outer tube portion. This can provide for radially inward flow of fuel through the fuel filter.

In a more detailed embodiment, it is a feature that the support assembly may comprise the following component parts bonded together: (a) an upper end cap providing the upper end wall portion; (b) a lower end cap providing the lower end wall portion; (c) a first tube component providing most or all of the first tube portion; and (d) a second tube component providing most or all of the second tube portion.

In the above feature of a more detailed embodiment, the lower end cap may comprise a central opening through the lower end wall portion. The fuel filter yet may further comprise an annular lip extending below the lower end wall portion that supports a first annular seal below the lower end wall portion. Further, the second tube portion may support a second annular seal in spaced relation to the first annular seal.

In the above feature of a more detailed embodiment, the upper end cap may further define a receptacle supporting an annular post seal. Further, the upper end cap may be a closed end cap other than a vent orifice defined therein above the annular seal.

In the above feature of a more detailed embodiment, the lower end cap may further feature a drain plug with a seal, with the drain plug depending from the lower end wall portion.

It is a sealing feature that the fuel filter may comprise a first annular seal and a second annular seal in axial spaced relation, with the first tube portion carrying the first annular seal, and the second tube portion carrying the second annular seal.

In the above sealing feature, the first annular seal may be disposed below the lower end wall portion and the second annular seal may be disposed above the lower end wall portion, with the water collection sump extending between the annular shroud region and the second tube portion for capturing water in a region above both of the first annular seal and the second annular seal.

In the aforementioned sealing feature, the second tube portion may include a solid ring portion that extends axially above the lower end of the ring of filter media. Further, the second tube portion may comprise a perforated section extending from the solid ring portion toward the upper end wall portion, with the solid ring portion carrying a gasket providing the second annular seal.

In the above feature, preferably the annular shroud region extends axially higher than solid ring portion.

It is a feature according to a more detailed embodiment that the support assembly comprises the following component parts bonded together: (a) an upper end cap providing the upper end wall portion; (b) a lower end cap providing the lower end wall portion; and (c) a first tube component providing the first tube portion that has an upper half bonded to the upper end cap and a lower half bonded to the lower end cap.

In the above feature according to a more detailed embodiment, the annular shroud region can provide that the upper half is more porous than the lower half. This can create lower fluid velocities proximate the water collection sump.

It is a feature that second tube portion comprises an elongated cage defining a plurality of windows and the water stripper media comprises a filtration mesh overlapping the windows.

The fuel filter may be provided in combination with a fuel filter housing to provide a filtration assembly (and may seal with the annular seals of the aforementioned sealing feature). In such filtration assembly, the fuel filter housing may comprise a housing assembly including (a) a dirty fuel inlet; (b) a clean fuel outlet; and (c) a water drain. For example, the housing assembly may comprise: a bowl; a cap adapted to fasten to the bowl to providing a filter chamber receiving the fuel filter; and a standpipe, extending up centrally in the bowl and communicating the clean fuel outlet and the water drain, with the fuel filter positioned over the standpipe and engaging with the first annular seal and the second annular seal.

In the above filtration assembly combination, the standpipe may define a clean fuel port for the clean fuel outlet above each of the first and second annular seals. Further, the standpipe may define a separated water intake port for the water drain that is interposed between the first annular seal and the second annular seal.

In the aforementioned filtration assembly combination, the housing assembly may further comprise an unfiltered fuel drain in a bottom region of the bowl, with the support assembly of the fuel filter further comprising a drain plug that plugs the unfiltered fuel drain when mounted in the bowl on the standpipe.

It is a further feature that the fuel filter may comprise a drain plug depending from the lower end wall portion in one embodiment, or alternatively the fuel filter may feature a drain plug depending from the first tube portion in another embodiment.

In accordance with another inventive aspect of the present invention, a fuel filter comprises: a ring of filter media that has an upper end and a lower end; and a support assembly. The support assembly comprises: (a) upper end wall portion connected to the upper end, (b) a lower end wall portion connected to the lower end, (c) a first tube portion, with the first tube portion extending between the upper end wall portion and the lower end wall portion and arranged along the ring of filter media with the first tube portion providing for a perforate region, and (d) a second tube portion radially spaced from the first tube portion, wherein the second tube portion provides and/or supports a water stripper media. In this aspect, the fuel filter further comprises: first and second annular seals in axial spaced relation, with the first tube portion carrying the first annular seal below the lower end wall portion, and the second tube portion carrying the second annular seal above the lower end wall portion. A water collection sump is provided in a region above the first annular seal.

One more of the features in any of the aforementioned or following paragraphs may be used in alone or combination with this inventive aspect.

For example, in the above aspect the first tube portion may provide for a perforate region either through and/or past the first tube portion.

It is a feature that the first tube portion may comprise an annular shroud region extending above the lower end wall portion.

When the annular shroud is used in this aspect, any of the aforementioned shroud features above or any such features discussed below may be utilized.

For example, the shroud may further cover a lower region of the ring of filter media for causing fuel velocity to be lower proximate the lower end wall portion as compared to the perforate region and prevent water that gravitationally migrates towards the water collection sump from re-emulsifying into the fuel flow.

It is a feature according to a more detailed embodiment that the support assembly comprises the following component parts bonded together: (a) an upper end cap providing the upper end wall portion; (b) a lower end cap providing the lower end wall portion; (c) a first tube component providing most or all of the first tube portion; and (d) a second tube component providing most or all of the second tube portion.

In the above feature, the lower end cap may additionally comprise a central opening through the lower end wall portion, and further comprising an annular lip (for example, as part of the lower end cap or as part of the first tube component, and preferably part of the first tube component) extending below the lower end wall portion supporting a first annular seal below the lower end wall portion.

In the above feature, the second tube portion may support a second annular seal in spaced relation to the first annular seal.

In the aforementioned feature relating to a more detailed embodiment, the upper end cap may define a receptacle supporting an annular post seal. Further, the upper end cap may be a closed end cap other than a vent orifice defined therein above the annular seal.

In the aforementioned feature relating to a more detailed embodiment, the lower end cap may feature a drain plug with a seal, with the drain plug depending from the lower end wall portion.

In the aforementioned feature relating to a more detailed embodiment, the second tube portion includes a solid ring portion that extends axially above the lower end of the ring of filter media. The second tube portion further comprises a perforated section extending from the solid ring portion toward the upper end wall portion, with the solid ring portion carrying a gasket providing the second annular seal.

It is a feature that the support assembly may comprise the following component parts bonded together: (a) an upper end cap providing the upper end wall portion; (b) a lower end cap providing the lower end wall portion; and (c) a first tube component providing the first tube portion that has an upper half bonded to the upper end cap and a lower half bonded to the lower end cap.

In the above feature, the upper half is preferably more porous than the lower half.

It is a feature second tube portion may comprise an elongated cage defining a plurality of windows and the water stripper media comprises a filtration mesh overlapping the windows.

The fuel filter can be incorporated into a filtration assembly that further comprises a fuel filter housing. For example, the fuel filter housing includes a housing assembly including (a) a dirty fuel inlet; (b) a clean fuel outlet; and (c) a water drain. For example, the housing assembly comprising: a bowl; a cap adapted to fasten to the bowl to providing a filter chamber receiving the fuel filter; and a standpipe, extending up centrally in the bowl and communicating the clean fuel outlet and the water drain, with the fuel filter positioned over the standpipe and engaging with the first annular seal and the second annular seal.

In the above filtration assembly feature, the standpipe may define a clean fuel port for the clean fuel outlet above each of the first and second annular seals. Further, the standpipe may define a separated water intake port for the water drain that is interposed between the first annular seal and the second annular seal.

In the aforementioned filtration assembly feature, the housing assembly can further comprise an unfiltered fuel drain in a bottom region of the bowl, with the support assembly further comprising a drain plug that plugs the unfiltered fuel drain when mounted in the bowl on the standpipe.

Different filter medias may be used in the fuel filters of the inventive aspects. For example, wet-laid combination of synthetic, cellulose and/or glass fibers can be used for a first stage of filtration. A media that prevents passage of water droplet for a second stage filtration is also used, for example a mesh material.

For use a fuel filter, it is a feature that the ring of filter media comprises a non-woven fiber entanglement; wherein the non-woven fiber entanglement has at least an efficiency in a range from Beta75 = 4µ to 30µ per ISO 19438 and more preferably Beta75 = 4µ to 10µ.

For use as a fuel filter that effectively removes water, it is a feature that the water stripper media comprises a water stripping mesh having a variable pore size with permeability ranging from 1000 to 2000 mils, and more preferably 1000 to 1400 mils.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a side elevation view of a filter element according to an embodiment of the present invention;
FIG. 2 is cross-sectional view of the filter element of FIG. 1, taken along a vertical plane coincident with the central axis of the filter element;
FIG. 3 is an exploded assembly view of structural components of the filter element shown in FIGS. 1-2, shown in cross section;
FIG. 4 is a cross-section of a filter system including the filter element of the previous figures that is mounted into a filter housing;
FIG. 5 is an enlarged view of the lower portion of the cross-section view of FIG.2;
FIG. 6 is a partly schematic operational view of the filter system shown in FIG. 4, taken from a different plane to show porting of different liquid portions;
FIGS. 7-11 are different views of the pleated filter media tube used in the filter element of the previous figures, with FIGS. 7-8 being end views, FIG. 9 a side elevation view, FIG. 10 a vertical cross-section view coincident with the central axis, and FIG. 11 a perspective lower end view;
FIG. 12 is a cross sectional view of an alternative embodiment of a filter element that is the same as FIG. 2, except that the drain plug is integrally provided on the pleated filter media tube instead of the lower end cap;
FIG. 13 is a cross sectional view of another alternative embodiment of a filter element that is the same as FIG. 2, except that the drain plug is integrally provided on the pleated filter media tube instead of the lower end cap and as an elbow configuration part of a two-piece assembly;
FIG. 14 is an exploded assembly view of the two-piece assembly for the pleated filter media tube of FIG. 13.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

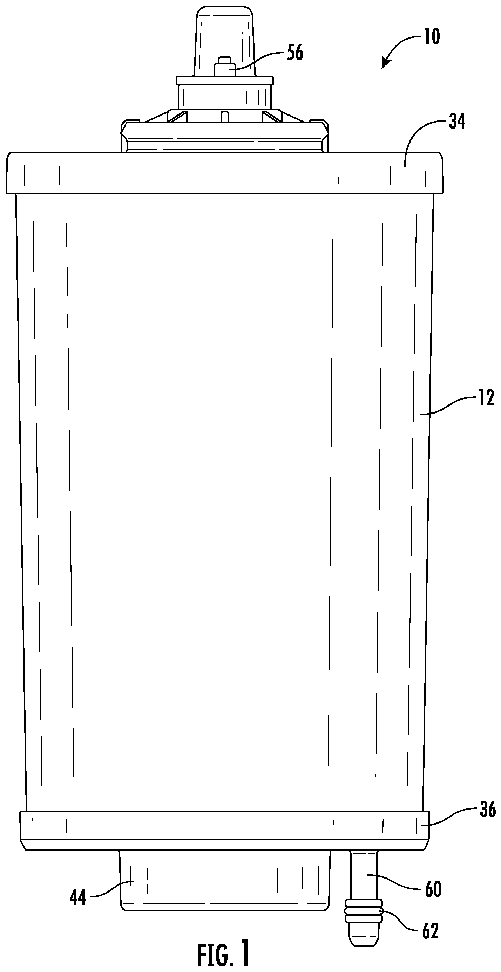

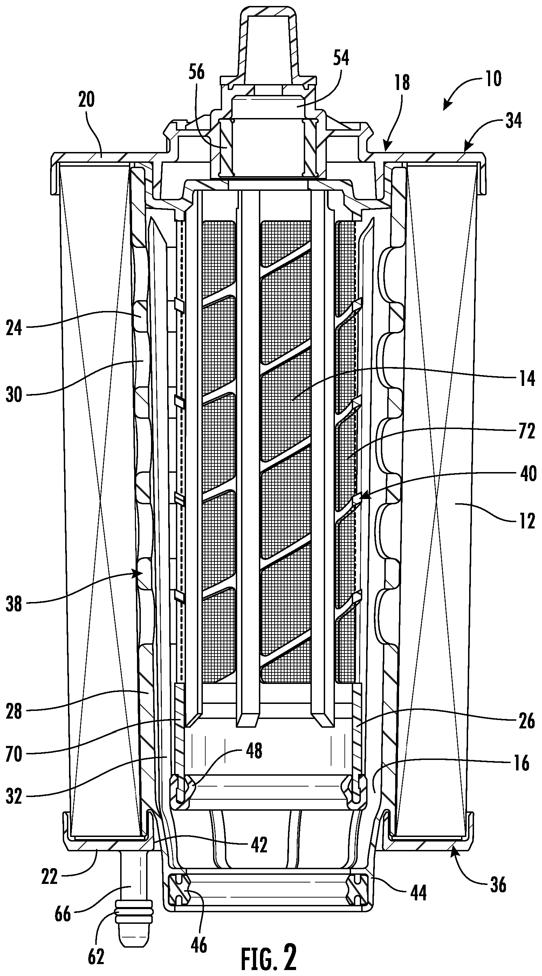

Referring to FIGS. 1-3, an embodiment of the present invention has been illustrated as a fuel filter 10. The fuel filter 10 comprises two-stages of filtration for separating both particulates and water out of a fuel flow. The fuel filter 10 includes a ring 12 of filter media having an upper end and a lower end; and a water stripper media 14.

For example, the ring 12 of filter media may be a pleated filter media ring as shown. For example, the water stripper media 14 may be tubular arrangement of fine mesh.

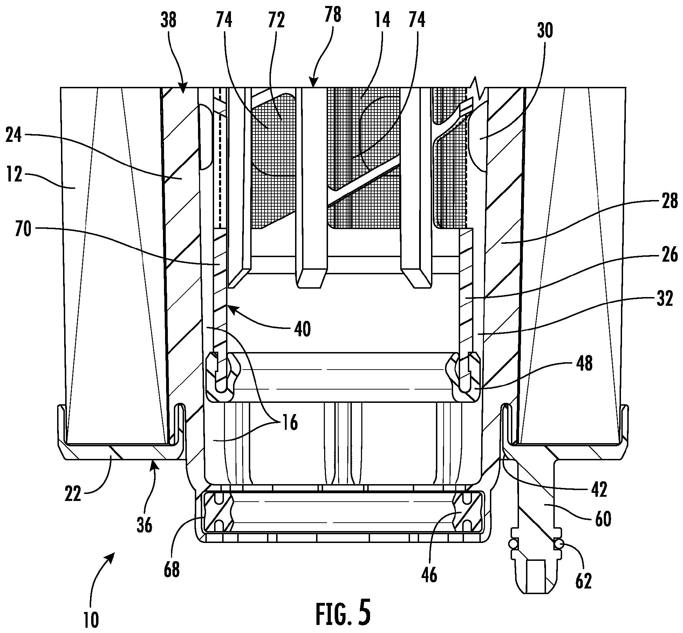

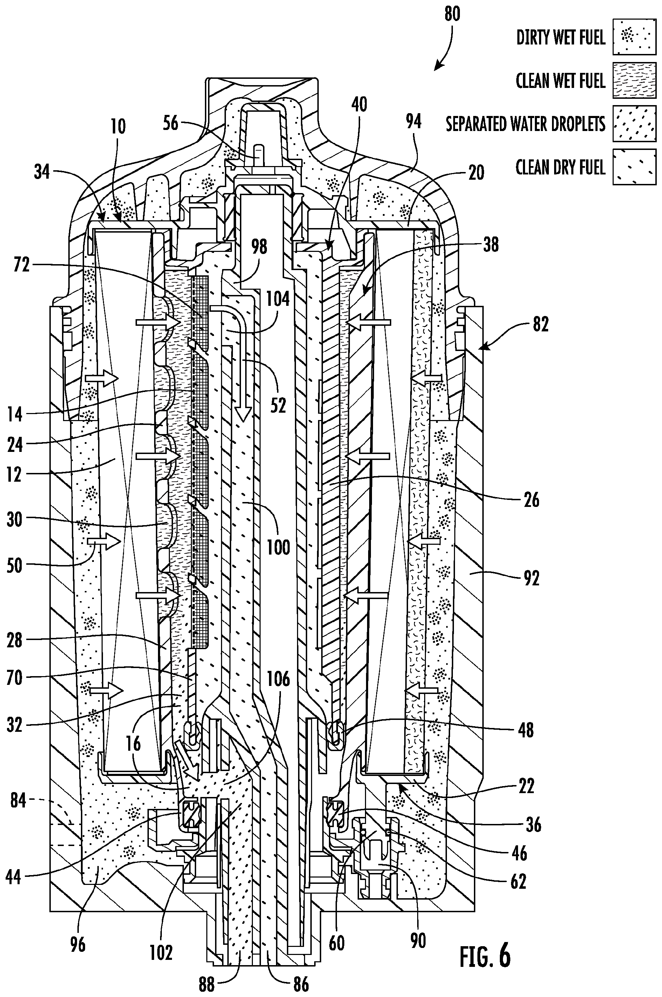

In operation (and with additional reference to FIG. 6 schematically showing liquid filtration/flows), unfiltered fuel that may carry particulates and/or emulsified water/water droplets will pass through the ring 12 of filter media which may also then tend to coalesce water droplets. The water stripper media 14 is operable to strip out and prevent passage of such water droplets. As water is typically heavier than most fuels, water gravitationally will migrate and/or settle in a water collection sump 16 provided by the fuel filter 10 (the sump being enlarged and shown in the lower portion view of FIG. 5).

For example, the ring 12 of filter media comprises a non-woven fiber entanglement that comprises a wet-laid combination of synthetic, cellulose and/or glass fibers; wherein the non-woven fiber entanglement has at least an efficiency in a range from Beta75 = 4µ to 30µ per ISO 19438 and more preferably Beta75 = 4µ to 10µ. Additionally, the ring 12 of filter media may have a silicone treatment to enhance performance.

For example, the water stripper media 14 may be a water stripping mesh as shown, and may have a variable pore size with permeability ranging from 1000 to 2000 mils, and more preferably 1000 to 1400 mils. Such water stripping mesh may be formed of a hydrophobic material or have hydrophobic treatment such as a wet chemical and/or plasma treatment process to better prevent passage of water droplets and to screen those for retention on the upstream side thereof.

To support and arrange the ring 12 of filter media and the water stripper media 14, a support assembly 18 which comprises various structural components assembled together that collectively can comprise (a) upper end wall portion 20 connected to the upper end of the ring 12 of filter media; (b) a lower end wall portion 22 connected to the lower end of the ring 12 of filter media; (c) a first tube portion positioned along the ring 12 of filter media; and (d) second tube portion 26 radially spaced from the first tube portion and along the water stripper media 14.

The first tube portion 24 extends between the upper end wall portion 20 and the lower end wall portion 22 and in this embodiment arranged along the inner periphery of the ring 12 of filter media. The first tube portion 24 may extend entirely between end wall portions 20, 22 to support the ring 12 of filter media against fluid pressure exerted by unfiltered fuel flow along the outside thereof.

The second tube portion 24 supports the water stripper media 14 such as having the water stripper media 14 embedded therein or by the water stripper media 14 being bonded to the inner or outer periphery thereof.

The support assembly 18 is arranged such as to create a quieter velocity zone and/or wall about the water collection sump 16 for causing in use fuel velocity to be lower proximate the lower end wall portion 22 and prevent water that gravitationally migrates into the water collection sump from re-emulsifying into fuel flow.

To provide for a quitter zone and/or a more sizeable water collection sump, in the embodiment shown, the first tube portion 24 includes an annular shroud region 28 extending from the lower end wall portion 22. A perforate region 30 extends above the annular shroud region 28 toward the upper end wall portion 20. The water collection sump 16 is delimited by the annular shroud region 28, and optionally may also be delimited in part by the second tube portion 28 as shown.

The perforate region 30 allows fuel to flow through past/through first tube portion 24 and around/above the shroud and thereby comprises at least one opening that may be provided in various ways such as an annular void region above the annular shroud region 28, or at least one and typically multiple openings defined through a tube wall portion as shown, or a combination thereof. The perforate region 30 may be formed by one component part or by multiple component parts. In any of these embodiments (an annular void, single opening or multiple openings), the first tube portion 24 extends between the upper end wall portion 20 and the lower end wall portion 22 and is arranged along the ring 12 of filter media; and the first tube portion includes: (i) the annular shroud region 28 extending from the lower end wall portion 22, with (ii) the perforate region 30 extending above the annular shroud region 28 toward the upper end wall portion 20. Stated another way, in any of these embodiments (an annular void, single opening or multiple openings), the first tube portion 24 provides for the perforate region 30.

In the arrangement shown, the annular shroud region 28 extends above the lower end wall portion 22 and covers a lower region of the ring 12 of filter media. For example, for best improvements in water separation and to prevent re-emulsifying, the annular shroud preferably covers at least 15% of an axial span of the ring 12 of filter media, more preferably at least 20 % of the axial span of the ring 12 of filter media, and most preferably between 25% and 35 % of the axial span of the ring 12 of filter media.

The annular shroud region 28 typically should be less perforate than the perforate region 30 for causing in use fuel velocity to be lower proximate the lower end wall portion 22 and at the lower end of the ring 12 of filter media, to prevent water that gravitationally migrates into the water collection sump 16 from re-emulsifying into fuel flow. While it is possible that the shroud may be porous and/or otherwise less perforate than the perforate region 30, the annular shroud region is preferably an imperforate ring portion as shown.

In an embodiment, the annular shroud region 28 provides that the upper half of the first tube portion 24 that is more porous than the lower half of the first tube portion 24. In this manner, lower velocities are experienced at the lower half as compared with the upper half during operational fuel flow through the fuel filter 10, and thereby water collected along the bottom half, for example in the vicinity of the gravitational bottom at the water collection sump 16 is less likely to become emulsified/re-entrained in the fuel flow.

With the arrangement of the support assembly 16, the water collection sump 16, comprises an annular cavity 32 extending between the annular shroud region 28 and a lower end portion of the second tube portion 26. The water collection sump 16 may also extend below the lower end portion of the second tube portion 26 as shown.

For outside-in-flow which is the preferred arrangement as embodied in the figures, the first tube portion 24 is an "outer" tube portion arranged along an inner periphery of the ring 12 of filter media and the second tube portion 26 is an "inner" tube portion radially inside of the outer tube portion 24. The first and second tube portions 24, 26 may be coaxially and concentric arranged relative to each other in radial spaced relation.

To provide for the various portions 20, 22, 24, 26 of the support assembly 18 in a convenient to assemble arrangement, the support assembly 18 is shown to comprise the following component parts bonded together: (a) an upper end cap providing the upper end wall portion 20; (b) a lower end cap 36 providing the lower end wall portion 22; (c) a first tube part 38 providing most or all of the first tube portion 24; and (d) a second tube part 40 providing most or all of the second tube portion 26.

Also, these parts (caps 34,26 and tube parts 38, 40) can all preferably be formed from injection molded plastic material as shown via cross-hatch. Holes or windows may be integrally molded into the tube parts 38, 40 to provide for the perforate region 30 and the perforate section. Additionally, the opposed ends of the annular ring 12 of filter media can be sealed and bonded to the upper and lower end caps 34, 36 such as through potting or other adhesive attachment, or direct embed in which the plastic material of the end cap is softened and bonded directly to the ring 12 of filter media.

While the shroud region 28 may be an additional component in some embodiments (such as an additional cover/screen), advantageously the second tube part 40 can also unitarily provide the shroud region 28 as an integrally formed portion thereof without the need for an additional component. For example, this can be done via an imperforate ring portion molded directly into the lower end of the first tube part 38.

However, in additional embodiments of the present invention, different integral portions of the end caps 34, 36 could provide part of the various tube portions 24, 26. For example, the lower end cap 36 could have a higher inner annular posting wall that would be the annular shroud region 28 then of the first tube portion 24. And/or various portions of the tube parts 38, 40 can provide portions to the end wall portions 20, 22, 24, 26 of the support assembly 18. It is also not necessary for all components to be coupled together in the support assembly 18, for example, the second tube part 40 and water striper media 14 could be separate from the remainder of the fuel filter 10, but preferably all are coupled together to provide easier one-step installation and removal rather than a sequence. Fewer or more component parts may thereby provide for the various portions of the alternatives as discussed in the paragraph or otherwise are thereby encompassed by the appended broader claims such as the independent claims appended hereto.

Referring in greater detail to further features of the illustrated embodiment, the lower end cap 36 comprises a central opening 42 through the lower end wall portion 22 that as shown in FIG. 6 can facilitate separate flow paths for water drainage and cleaned fuel flow.

The support assembly 18, can further comprise an annular lip 44 (for example, that may be provided integrally by the first tube part 38) extending below lower end wall portion 22 for supporting a first annular seal 46 below the lower end wall portion 22. Furthermore, the second tube portion 26 typically supports a second annular seal 48 in spaced relation to the first annular seal 46. The seals prevent leakage between the water collection sump 16, the unfiltered fuel chamber 50 and the filtered fuel chamber/passageway 52.

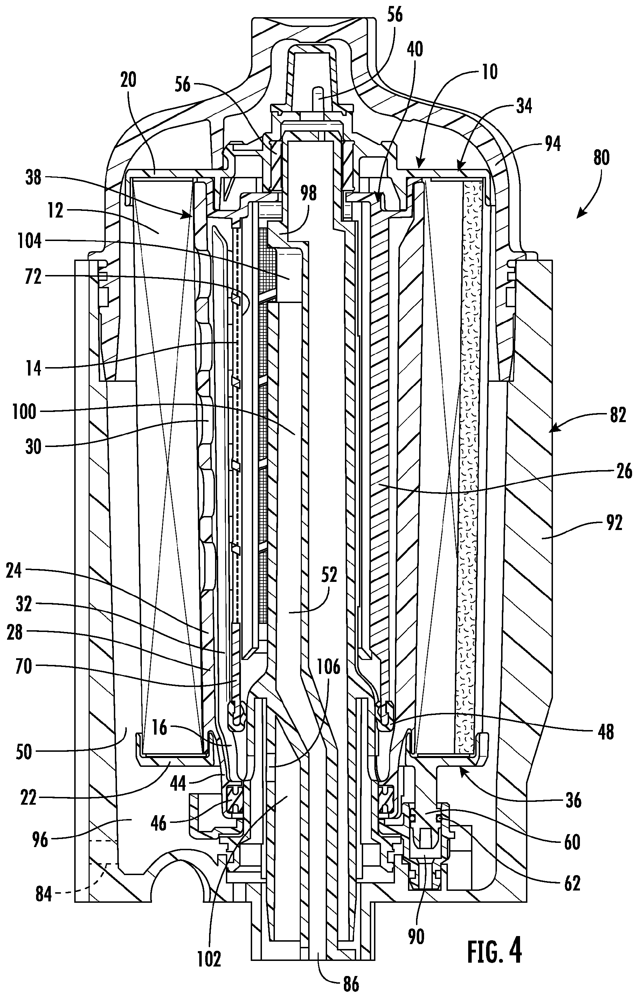

The upper end cap 34 may feature a receptacle 54 supporting an annular post seal 56 that can seal against the standpipe 98 (FIG. 4) . The upper end cap 34 is a closed end cap as illustrated other than an optional vent orifice 58 defined therein above the annular seal 56 that affords for easier install to relieve pressure during installation. Even with the vent orifice, the upper end cap 34 is still considered a closed end cap as fluid does not readily flow therethrough during operation, whereas the lower end cap 36 is considered an open end cap as fluid does readily flow therethrough during operation.

At the lower end, the lower end cap 36 may feature a drain plug 60 supporting an O-ring seal 62, in which the drain plug 60 depends from the lower end wall portion 22, of the lower end cap 36 in this embodiment.

As shown, the fuel filter 10 features a sealing arrangement that is preferably for the water collection sump 16.

For example, the sealing arrangement may comprise the first annular seal 46 and the second annular seal 48 in axial spaced relation in the vicinity of the collection sump 16; with the first tube portion 24 carrying the first annular seal 46, and the second tube portion 26 carrying the second annular seal 48.

For example, the seals 46, 48 can be provided by elastomeric O-ring gaskets as shown and can be carried by different means including mechanical retention (e.g. tongue/groove retention) and/or bonding agent. For example, the first annular seal 46 is resiliently snapped into a ribbed retaining groove 68 provided along the end tip portion of the first tube part 38, and the second annular seal 48 is slitted with a groove and tightly fit or even snap-fitted on the protruding end tip of the second tube part 40.

As shown, the first annular seal 46 is disposed below the lower end wall portion 22 and the second annular seal 48 is disposed above the lower end wall portion 22. As shown in installed use, these seals 46, 48 are operable for sealing the water collection sump 16.

In the embodiment shown, the water collection sump 16 can be thereby considered in the fuel filter 10 as extending between the annular shroud region 28 and the second tube portion 26 for capturing water in a region above both of the first and second annular seals 46, 48.

In the vicinity of the water collection sump 16, the second tube portion 26 (e.g. provided by the second tube part 40) may also include a solid ring portion 70 that extends axially above the lower end of the ring 12 of filter media (e.g., above the top of the lower end wall portion 22 of lower end cap 36). This solid ring portion 70 can be impermeable, whereas the second tube portion 26 can further comprise a perforated section 70 extending from the solid ring portion 70 toward the upper end wall portion 20. The solid ring portion 70 can carry a ring gasket providing the second annular seal 48.

In such arrangement and as shown, the annular shroud region 28 extends axially higher than solid ring portion 70, as its location to the pleated annular ring 12 of filter media is more important to blocking flow, however, the walling provided by the solid ring portion 70 also assists to keep liquid flow velocities low in the vicinity of the water collection sump.

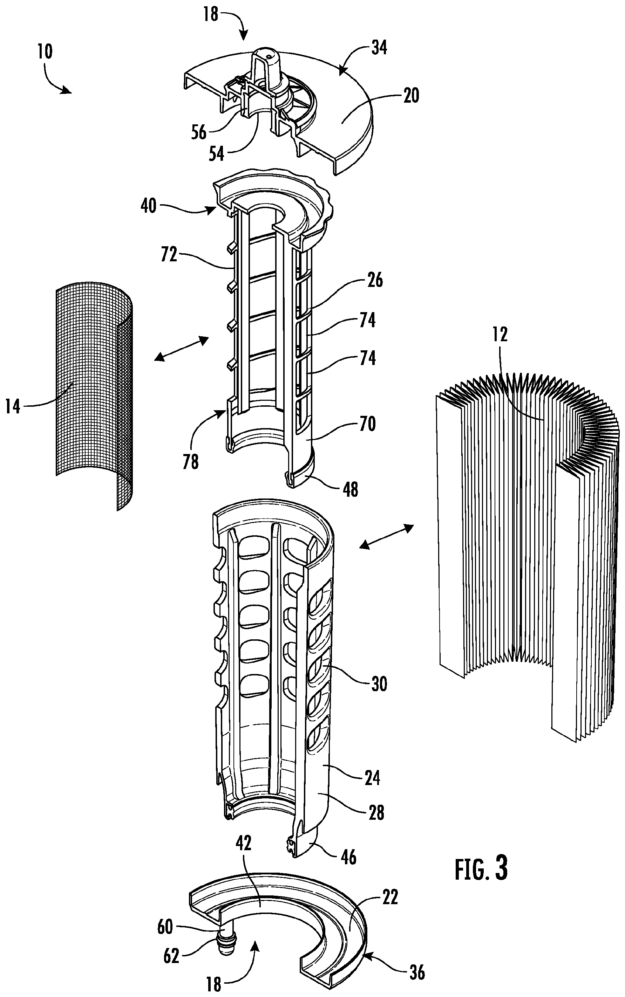

For example, the second tube portion 26 and second tube part 40 can comprise and be in the form of an elongated cage 78 best shown in FIG. 3, defining a plurality of windows 74 for the perforated section 72. The water stripper media 14 can comprise a filtration mesh 76 overlapping the windows (e.g., the filtration mesh may overlay the upstream or downstream side of the cage 78 or may more preferably be embedded such as during a plastic injection process directly into the plastic material of the cage 78).

The fuel filter 10 is usable in a filter system depicted in FIGS. 4 and 6 as a filtration assembly 80 that further comprises a fuel filter housing 82. The fuel filter housing 82 provides (a) a dirty fuel inlet 84 (for receiving fuel from the fuel tank supply); (b) a clean fuel outlet (for delivering filtered fuel toward the engine); (c) a water drain (that may be to a water sump and/or drain valve and can allow water to be periodically drained), and (d) preferably an unfiltered fuel drain (for draining the filter housing 82 returning fuel to the filter tank such as during servicing and to avoid fuel spilling during filter replacement).

For example, the filter housing 82 may be provided by a housing assembly comprising a bowl 92, a cap 94 adapted to fasten to the bowl 92 to provide an internal filter chamber 96 receiving the fuel filter 10; and a standpipe 98 extending up centrally in the bowl 92 and into the filter chamber 96.

The standpipe 98 includes internal passageways 100, 102 for the clean fuel outlet 86 and the water drain 88, respectively, as shown. The fuel filter 10 is positioned over the standpipe 98 and engages with the first and second annular seals 46, 48.

The standpipe 98 defines a clean fuel intake port 104 connected to the clean fuel passageway 100 and to the clean fuel outlet 86, with the clean fuel intake port 104 above each of the first and second annular seals 46, 48, and preferably higher up, for example in the upper half and even more preferably upper quarter region of the pleated annular ring 12 of filter media. The standpipe 98 also defines a separated water intake port 106 connected to the water passageway 102 leading to the water drain 88, in which water intake port 106 is at a position interposed between the first and second annular seals 46, 48.

Finally, the support assembly 18 comprises the drain plug 60 that plugs the unfiltered fuel drain 90 when the fuel filter 10 is mounted in the bowl 92 on the standpipe 98 with the cap 94 fully closed such as by fully threading the cap on the bowl.

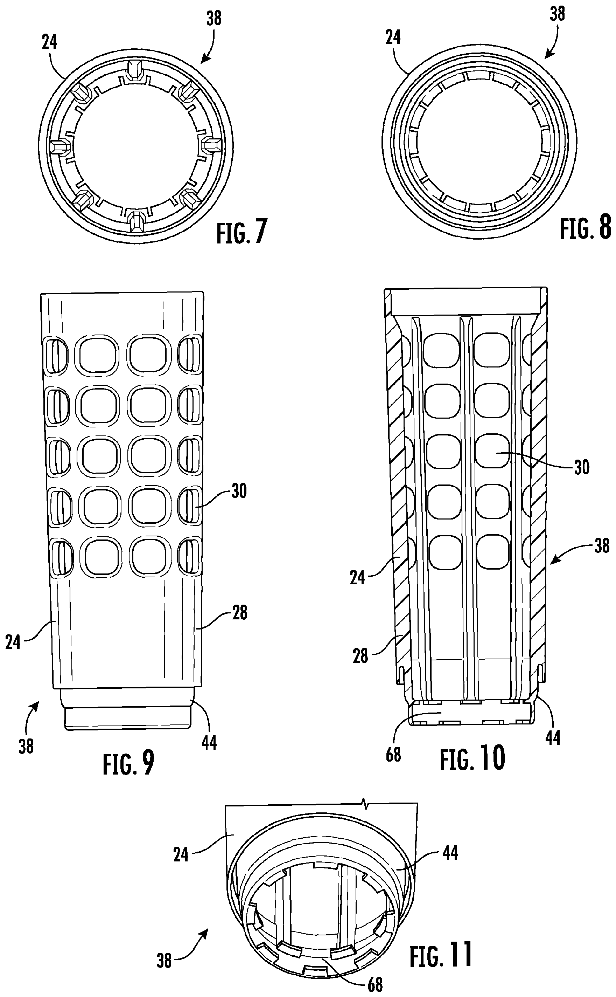

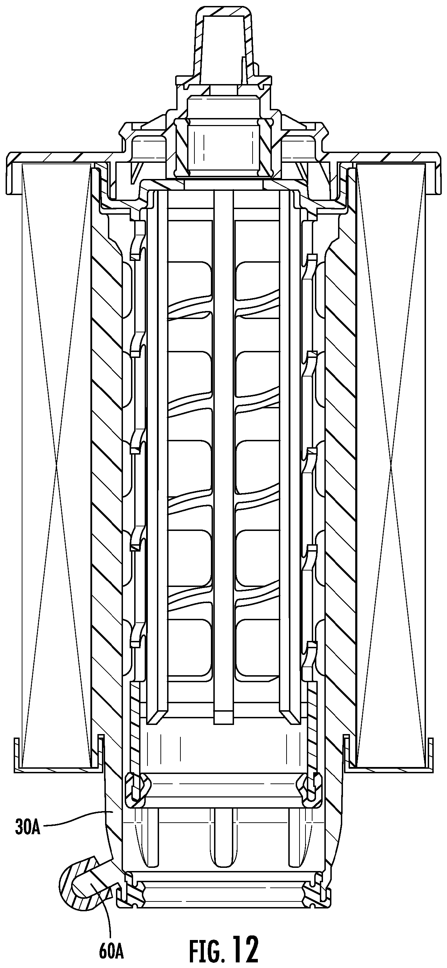

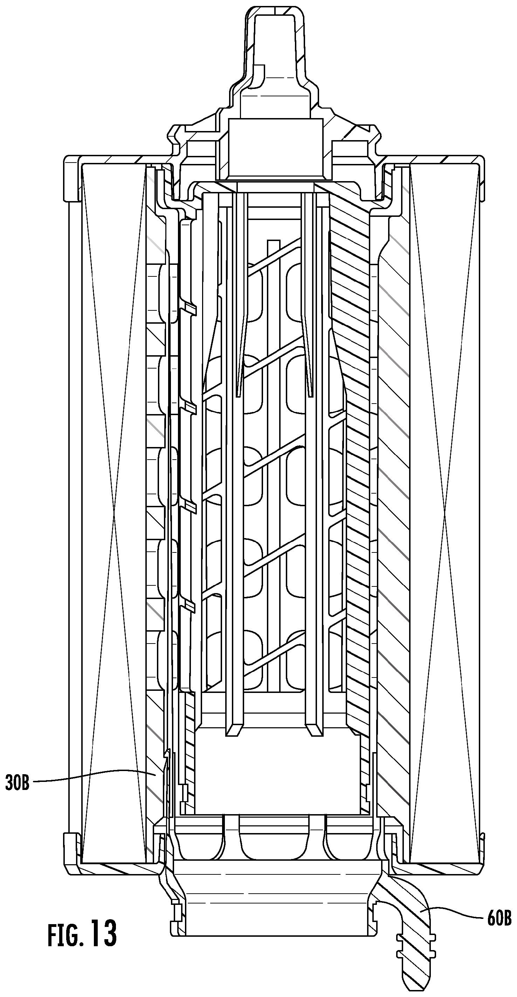

As shown in FIGS. 1-11, the drain plug 60 depends from the lower end wall portion 20 and can be an integral and unitarily formed portion of the lower end cap 36. However, other embodiments are shown in FIGS. 12-14, with different drain plugs 60A, 60B shown as part of the first tube part 38 rather than as part of the lower end cap 36. For example, in FIG. 12 an angled drain plug 60A is shown depending from the first tube part 38A, that would fit in an angled drain (not shown), whereas an elbow drain plug 60 depending from the first tube part 38B would fit and plug the same unfiltered fuel drain 90 in the fuel filter housing 82.

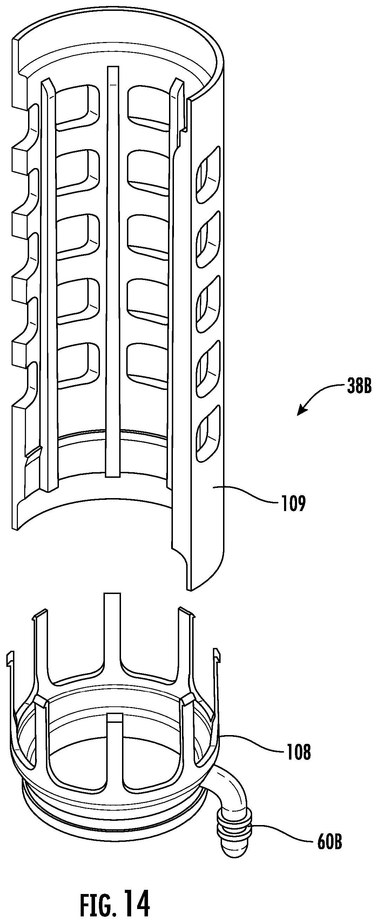

As also shown in FIG. 14, the first tube part 38B may actually be an assembly such as a snap fit as between two first tube sub-parts 108, 109.

Other than these differences in the two above paragraphs, the features, teachings and disclosure of FIGS. 1-11 are fully applicable to that of FIGS. 12-14 and only these differences differentiate these different illustrated embodiments.

Further aspects and embodiments of this disclosure are detailed in the following numbered clauses:
1. A fuel filter, comprising: a ring of filter media having an upper end and a lower end; a support assembly, comprising: (a) upper end wall portion connected to the upper end, (b) a lower end wall portion connected to the lower end, (c) a first tube portion, the first tube portion extending between the upper end wall portion and the lower end wall portion and arranged along the ring of filter media, wherein the first tube portion includes:(i) an annular shroud region extending from the lower end wall portion, with (ii) a perforate region arranged above the annular shroud region toward the upper end wall portion; (d) a second tube portion radially spaced from the first tube portion, the second tube portion supporting a water stripper media; and a water collection sump delimited by the annular shroud region.
2. The fuel filter of clause 1, wherein the annular shroud region extends above the lower end wall portion and covers a lower region of the ring of filter media, and optionally wherein the annular shroud covers at least 15% of an axial span of the ring of filter media, more preferably at least 20 % of the axial span of the ring of filter media, and most preferably between 25% and 35 % of the axial span of the ring of filter media.
3. The fuel filter of clause 1 or clause 2, wherein the annular shroud region is less perforate than the perforate region for causing in use fuel velocity to be lower proximate the lower end and the annular shroud region as compared to the perforate region and prevents water that gravitationally migrates into the water collection sump from re-emulsifying into fuel flow, and wherein the annular shroud region is preferably provided by an imperforate ring portion.
4. The fuel filter of any preceding clause, wherein the water collection sump comprises an annular cavity extending between the annular shroud region and a lower portion of the second tube portion.
5. The fuel filter of any preceding clause, wherein the first tube portion is an outer tube portion arranged along an inner periphery of the ring of filter media and the second tube portion is an inner tube portion radially inside of the outer tube portion.
6. The fuel filter of any preceding clause, where the support assembly comprises the following component parts bonded together: (a) an upper end cap providing the upper end wall portion; (b) a lower end cap providing the lower end wall portion; (c) a first tube component providing most or all of the first tube portion; and (d) a second tube component providing most or all of the second tube portion.
7. The fuel filter of clause 6, wherein the lower end cap comprises a central opening through the lower end wall portion, and further comprising an annular lip extending below the lower end wall portion supporting a first annular seal below the lower end wall portion, and wherein the second tube portion supports a second annular seal in spaced relation to the first annular seal.
8. The fuel filter of clause 6, wherein the upper end cap defines a receptacle supporting an annular post seal, and wherein the upper end cap is a closed end cap other than a vent orifice defined therein above the annular seal; and/or wherein the lower end cap has a drain plug with a seal, the drain plug depending from the lower end wall portion.
9. The fuel filter of clause 1, further comprising a first annular seal and a second annular seal in axial spaced relation, the first tube portion carrying the first annular seal, the second tube portion carrying the second annular seal.
10. The fuel filter of clause 9, wherein the first annular seal is disposed below the lower end wall portion and the second annular seal is disposed above the lower end wall portion, with the water collection sump extending between the annular shroud region and the second tube portion for capturing water in a region above both of the first annular seal and the second annular seal.
11. The fuel filter of clause 9 or clause 10, wherein the second tube portion including a solid ring portion that extends axially above the lower end of the ring of filter media, and wherein the second tube portion further comprise a perforated section extending from the solid ring portion toward the upper end wall portion, the solid ring portion carrying a gasket providing the second annular seal, and optionally wherein the annular shroud region extends axially higher than solid ring portion.
12. The fuel filter of any preceding clause, wherein the support assembly comprises the following component parts bonded together: (a) an upper end cap providing the upper end wall portion; (b) a lower end cap providing the lower end wall portion; (c) a first tube component providing the first tube portion that has an upper half bonded to the upper end cap and a lower half bonded to the lower end cap, wherein the annular shroud region provides that the upper half is more porous than the lower half.
13. The fuel filter of any preceding clause, wherein second tube portion comprises an elongated cage defining a plurality of windows and the water stripper media comprises a filtration mesh overlapping the windows.
14. A filtration assembly including the fuel filter of clause 9, further comprising a fuel filter housing, the fuel filter housing comprising: a housing assembly including (a) a dirty fuel inlet; (b) a clean fuel outlet; and (c) a water drain, the housing assembly comprising: a bowl; a cap adapted to fasten to the bowl to providing a filter chamber receiving the fuel filter; and a standpipe, extending up centrally in the bowl and communicating the clean fuel outlet and the water drain, the fuel filter positioned over the standpipe and engaging with the first annular seal and the second annular seal.
15. The filtration assembly of clause 14, wherein the standpipe defines a clean fuel port for the clean fuel outlet above each of the first and second annular seals, and wherein the standpipe defines a separated water intake port for the water drain that is interposed between the first annular seal and the second annular seal, optionally wherein the housing assembly further comprises an unfiltered fuel drain in a bottom region of the bowl, the support assembly further comprising a drain plug that plugs the unfiltered fuel drain when mounted in the bowl on the standpipe.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A fuel filter, comprising:
a ring of filter media that has an upper end and a lower end;
a support assembly, the support assembly comprising:
(a) an upper end wall portion connected to the upper end;
(b) a lower end wall portion connected to the lower end;
(c) a first tube portion, the first tube portion extending between the upper end wall portion and the lower end wall portion and arranged along the ring of filter media, wherein the first tube portion provides for a perforate region; and
(d) a second tube portion radially spaced from the first tube portion, wherein the second tube portion supports a water stripper media; and
first and second annular seals in axial spaced relation, the first tube portion carrying the first annular seal below the lower end wall portion, and the second tube portion carrying the second annular seal above the lower end wall portion, wherein a water collection sump is provided in a region above the first annular seal.

2. The fuel filter of claim 1, wherein the first tube portion comprises an annular shroud region extending above the lower end wall portion and covering a lower region of the ring of filter media for causing fuel velocity to be lower proximate the lower end wall portion as compared to the perforate region and prevents water that gravitationally migrates towards the water collection sump from re-emulsifying into the fuel flow.

3. The fuel filter of claim 1 or claim 2, wherein the support assembly comprises the following component parts bonded together: (a) an upper end cap providing the upper end wall portion; (b) a lower end cap providing the lower end wall portion; (c) a first tube component providing most or all of the first tube portion; and (d) a second tube component providing most or all of the second tube portion.

4. The fuel filter of claim 3, wherein the lower end cap comprises a central opening through the lower end wall portion, and further comprising an annular lip extending below the lower end wall portion supporting the first annular seal below the lower end wall portion.

5. The fuel filter of claim 4, wherein the annular lip is a part of the first tube component.

6. The fuel filter of any one of claims 3 to 5, wherein the upper end cap defines a receptacle supporting an annular post seal, and wherein the upper end cap is a closed end cap other than a vent orifice defined therein above the annular post seal.

7. The fuel filter of any one of claims 3 to 6, wherein the lower end cap has a drain plug with a seal, the drain plug depending from the lower end wall portion.

8. The fuel filter of any preceding claim, wherein the second tube portion includes a solid ring portion that extends axially above the lower end of the ring of filter media, and wherein the second tube portion further comprises a perforated section extending from the solid ring portion toward the upper end wall portion, the solid ring portion carrying a gasket providing the second annular seal.

9. The fuel filter of claim 1, wherein the support assembly comprises the following component parts bonded together: (a) an upper end cap providing the upper end wall portion; (b) a lower end cap providing the lower end wall portion; and (c) a first tube component providing the first tube portion that has an upper half bonded to the upper end cap and a lower half bonded to the lower end cap.

10. The fuel filter of claim 9, wherein the upper half is more porous than the lower half.

11. The fuel filter of any preceding claim, wherein the second tube portion comprises an elongated cage defining a plurality of windows and the water stripper media comprises a filtration mesh overlapping the windows.

12. The fuel filter of any preceding claim, wherein:
the ring of filter media comprises a non-woven fiber entanglement; wherein the non-woven fiber entanglement has at least an efficiency in a range from Beta75 = 4µ to 30µ per ISO 19438 and more preferably Beta75 = 4µ to 10µ; and
the water stripper media comprises a water stripping mesh having a variable pore size with permeability ranging from 1000 to 2000 mils, and more preferably 1000 to 1400 mils.

13. A filtration assembly comprising:
a fuel filter according to any preceding claims; and
a fuel filter housing, the fuel filter housing comprising:
a housing assembly including (a) a dirty fuel inlet; (b) a clean fuel outlet; and (c) a water drain, the housing assembly comprising:
a bowl;
a cap adapted to fasten to the bowl to providing a filter chamber receiving the fuel filter; and
a standpipe, extending up centrally in the bowl and communicating the clean fuel outlet and the water drain, with the fuel filter positioned over the standpipe and engaging with the first annular seal and the second annular seal.

14. The filtration assembly of claim 13, wherein the standpipe defines a clean fuel port for the clean fuel outlet above each of the first and second annular seals, and wherein the standpipe defines a separated water intake port for the water drain that is interposed between the first annular seal and the second annular seal.

15. The filtration assembly of claim 13 or claim 14, wherein the housing assembly further comprises an unfiltered fuel drain in a bottom region of the bowl, and the support assembly further comprises a drain plug that plugs the unfiltered fuel drain when mounted in the bowl on the standpipe.
